# EUROPÄISCHE PATENTSCHRIFT

(11) **EP 0 699 695 B1**
(45) Veröffentlichungstag und Bekanntmachung des Hinweises auf die Patenterteilung: **31.07.2002**
(21) Anmeldenummer: 95113209.1
(22) Anmeldetag: 23.08.1995
(51) Int. Cl.: C08G 2/24, C08G 2/28

(54) **Verfahren zur Herstellung von Polyacetalcopolymeren**
Process for the preparation of copolyacetals
Procédé de préparation de copolyacétals

(30) Priorität: 05.09.1994 DE 4431575
(43) Veröffentlichungstag der Anmeldung: 06.03.1996
(73) Patentinhaber: Ticona GmbH, 65451 Kelsterbach (DE)
(72) Erfinder: Fleischer, Dietrich, Dr., D-64287 Darmstadt (DE); Hoffmockel, Michael, Dr., D-65527 Niedernhausen (DE); Mück, Karl-Friedrich, Dr., D-65207 Wiesbaden (DE); Sextro, Günter, Dr., D-65207 Wiesbaden (DE)

(56) Entgegenhaltungen:
- EP-A- 0 080 656
- EP-A- 0 638 599
- FR-A- 2 254 592

## Beschreibung

Die Erfindung betrifft ein Verfahren zur Herstellung und Endgruppenstabilisierung von Polyacetalcopolymeren in homogener Phase sowie deren Aufarbeitung.

Es sind zahlreiche Verfahren zur Herstellung von Oxymethylencopolymeren aus Formaldehyd oder cyclischen Oligomeren des Formaldehyds, insbesondere Trioxan, in Gegenwart von kationisch wirksamen Initiatoren bekannt. Die kontinuierliche Polymerisation der Monomeren im technischen Maßstab ist beispielsweise in vielen Veröffentlichungen beschrieben (US-A-3,027,352, US-A-3,803,094, DE-C-1 161 421, DE-C-1 495 228, DE-C-1 720 358 und DE-C-3 018 898). Als Polymerisationsreaktoren sind u. a. beschrieben: Kneter, Extruder, Walzen oder Bänder. Gemeinsames Merkmal dieser Verfahren ist ein während der Polymerisation stattfindender Phasenübergang von gasförmigen bzw. flüssigen Monomeren zum teilkristallinen festen Polymeren. Dies führt zu Problemen beim Abführen der frei werdenden Polymerisations- und Kristallisationswärme und verursacht infolge Umsatzeinbußen.

In der europäischen Patentschrift EP-B-0 080 656 ist ein Verfahren zur kontinuierlichen Massepolymerisation von Trioxan in homogener, flüssiger Phase bei Temperaturen oberhalb von 135°C beschrieben. Als Vorteile dieses Verfahrens werden u.a. genannt: einfache Handhabung des Prozesses, geringer Energieaufwand und Polymerisate mit gleichbleibender Produktqualität.

In den deutschen Anmeldungen P 43 27 245.2 und P 44 23 617.4 (Priorität 13.8.93 bzw. 6.7.94, Titel: "Verfahren zur Herstellung von Polyacetalen") werden Verfahrensverbesserungen durch einfachere Prozeßführung infolge eines einfachen Übergangs ohne Trennelement vom Polymerisationsreaktor in den Desaktivierungsreaktor beschrieben. Diese Verbesserungen werden zudem durch den Abbau der instabilen Kettenenden in Gegenwart von Restmonomeren, im wesentlichen Trioxan und Formaldehyd, erreicht. Dabei gelingt es, den Anteil der instabilen Kettenenden bis auf etwa 0,1 Massenprozent zu senken. Bei der Aufarbeitung des Produktes mittels eines Entgasungsaggregates, beispielweise Extruder oder Flashkammer, verbleiben jedoch in den nach diesem Polymerisationsverfahren hergestellten Produkten Anteile von Verunreinigungen, zum Beispiel Formaldehydoligomere. Dieser Gehalt an Formaldehydoligomeren kann aber der Zulassung der Produkte für Lebensmittelanwendungen im Wege stehen. Auch wurde bei der Verarbeitung mit Hilfe von Spritzgußformen die Bildung von Belag beobachtet. Ferner sind die erforderlichen Entgasungsaggregate relativ groß, da die erreichbaren Umsätze nach diesem Polymerisationsverfahren zwischen 60 und 80 % liegen.

Es war daher Aufgabe der Erfindung die genannten Nachteile zu vermeiden.

Die Erfindung beschreibt ein Verfahren zur Herstellung und gleichzeitiger Endgruppenstabilisierung von Polyacetalcopolymeren in homogener Phase sowie deren Aufarbeitung, bei dem in einem Polymerisationsreaktor cyclische Formaldehydoligomere, vorzugsweise Trioxan, mit cyclischen Acetalen in Gegenwart eines Initiators copolymerisiert werden und nach dem Polymerisationsschritt der Initiator durch Zusatz basischer Substanzen desaktiviert wird, wobei die instabilen Kettenenden in Anwesenheit von Restmonomeren bis auf 0,01 % bis 1 %, vorzugsweise 0,02 % bis 0,5 %, insbesondere 0,05 % bis 0,3 % abgebaut werden und das Produkt am Reaktorausgang durch Entspannung in einer Granuliervorrichtung, vorzugsweise in einer Flüssigkeitsring- oder Unterflüssigkeitsgranuliervorrichtung, die jeweils mit Wasser, Alkoholen mit bis zu drei Kohlenstoffatomen, vorzugsweise Methanol, oder Gemischen daraus betrieben werden, einen Großteil der Restmonomeren verliert und die verbleibenden Restmonomeren sowie die im Produkt gelösten Verunreinigungen durch Extraktion mit Lösemitteln wie Wasser, Alkoholen mit bis zu drei Kohlenstoffatomen, vorzugsweise Methanol, oder Gemischen daraus, entfernt werden und das Produkt nach Trocknung und Stabilisierung granuliert wird.

Vorzugsweise wird die Polymerisation und der Abbau der instabilen Kettenenden in einem Rohrreaktor durchgeführt. Das Verfahren lehnt sich an die vorstehend beschriebenen deutschen Patentanmeldungen P 43 27 245.2 und P 44 23 617.4 an, auf die hiermit Bezug genommen wird.

Ausgangsmonomer für die Copolymerisation gemäß der Erfindung ist im allgemeinen Trioxan. Entscheidend für den erfolgreichen Ablauf des Verfahrens ist es, daß der notwendige Kettenendenabbau sich unmittelbar an die Polymerisation anschließt und in Gegenwart von Restmonomeren, d.h. nicht umgesetzten Monomeren, erfolgt.

Als Comonomere für die Polymerisation z.B. des Trioxans eignen sich cyclische Acetale wie Dioxolan, Diethylenglykol- oder Triethylenglykolformal, Butandiolformal oder lineare Polyacetale z.B. Polydioxolan oder Polyethylenglykolformal. Die Mengenanteile der Comonomeren, oder Mischungen daraus, betragen 0,5 bis 50 Massenprozent, vorzugsweise von 1 bis 30 Massenprozent, insbesondere 2 bis 10 Massenprozent. Die Zugabe der Comonomeren kann entweder in Mischung mit dem Hauptmomomeren oder in Form eines reaktiven Präpolymeren erfolgen. Gleichfalls durchführbar ist ein Zuschleusen des oder der Comonomeren nach erfolgter Homopolymerisation des Hauptmomoneren in die Polymerschmelze. Das oder die entsprechenden Comonomeren werden dann durch Transacetalisierungsreaktionen statistisch in die Polymerkette eingebaut. Die benötigte Verweilzeit der Reaktionsmischung im polymerisationsaktiven Zustand liegt für diese Reaktion im Bereich von 0,1 bis 10 Minuten, vorzugsweise 0,3 bis 5 Minuten, insbesondere 0,5 bis 2 Minuten.

Die Verwendung von bifunktionellen Comonomeren führt zu teilvernetzten oder verzweigten Produkten.

Als Initiatoren eignen sich Protonensäuren wie Perchlorsäure, Perfluoralkansulfonsäuren, vorzugsweise Trifluormethansulfonsäure sowie deren Anhydride sowie Heteropolysäuren oder Isopolysäuren (EP-B-0 325 052 und EP-B-0 347 119).

Die Initiatoren können in Mengen von 0,005 bis 500 ppm eingesetzt werden. Der bevorzugte Bereich liegt bei 0,01 bis 50 ppm, insbesondere bei 0,01 bis 5 ppm. Da die Initiatorkonzentration in hohem Maße die Molmasse beeinflußt, ist es empfehlenswert, den Initiator in gelöster, verdünnter Form zu dosieren. Als Lösemittel können prinzipiell alle die Polymerisation nicht beeinflussende Verbindungen verwendet werden; vorzuziehen sind cyclische und lineare Ether wie Oligoglykoldialkylether oder deren Mischungen mit aliphatischen oder cycloaliphatischen Kohlenwasserstoffen z.B. Cyclohexan; es sind auch Lactone wie Butyrolacton geeignet.

Die Molmassen der Polymeren können in bekannter Weise durch Regler auf die gewünschten Werte eingestellt werden. Als Kettenüberträger kommen in erster Linie Formale einwertiger Alkohole wie Methylal oder Butylal in Frage. Geeignet sind ferner die diesen Verbindungen zugrundeliegenden Alkohole selbst oder Wasser als Regler, obwohl sie bei der Kettenübertragung die Bildung instabiler Kettenenden verursachen. Die üblicherweise verwendeten Mengen liegen bei 10 bis 5000 ppm, die bevorzugte Konzentration zwischen 50 und 1000 ppm. Die Dosierung der Regler kann in bekannter Weise durch Zumischung zu den Monomeren vorgenommen werden. Es ist darüberhinaus aber auch möglich, die als Regler dienenden Substanzen zusammen mit dem Initiator in gleicher Lösung oder getrennt zu dosieren.

Der Polymerisationsreaktor ist im allgemeinen ein mit statischen Mischern ausgelegter Rohrreaktor, der temperierbar und druckfest ausgelegt ist. Durch die Einrichtung von Temperierzonen kann dem Reaktor ein bestimmtes Temperaturprofil aufgeprägt werden. Entlang des Reaktors befinden sich Meßstellen für Druck und Temperatur sowie Dosierstellen für Monomere, Initiator, Desaktivator und andere Zuschlagstoffe. Die bei der Polymerisation angewandten Temperaturen und Drücke entsprechen den üblichen, in der Praxis bekannten Werten, wie sie z.B. in der EP-B-0 080 656 beschrieben sind.

Für jeden der angegebenen Verfahrensschritte sind die Dimensionen, d.h. Durchmesser und Länge der entsprechenden statischen Mischelemente, in Abhängigkeit von Viskosität und Verweilzeit auszuwählen, wobei der Druckverlust möglichst klein gehalten werden soll. Hierbei greift man auf die Angaben der Hersteller derartiger Mischelemente zurück.

So sollte beispielsweise ein Rohrreaktor derart ausgelegt sein, daß ein enges Verweilzeitspektrum resultiert, das einen Gleichgewichtsumsatz ermöglicht, bei dem dann durch minimierte Verweilzeit zwangsläufig wenig Nebenreaktionen auftreten können.

Eine geeignete Vorrichtung ist in der deutschen Patentanmeldung P 43 27 246.0 beschrieben, auf die hiermit Bezug genommen wird. Es ist auch möglich, andere Aggregate, beispielsweise Extruder, zur Polymerisation und/oder zum Abbau der instabilen Kettenenden in Anwesenheit der Restmonomeren einzusetzen.

Die einzuhaltende Verweilzeit in der Polymerisationszone, z.B. im Rohrreaktor, beträgt 0,1 bis 10 Minuten, vorzugsweise 0,3 bis 5 Minuten und insbesondere 0,5 bis 2 Minuten. Der zu erzielende Umsatz liegt dabei bei 60 bis 80 Massenprozent, bezogen auf die eingesetzten Monomere. Die Molmassen (M_{w}) der erzeugten Polyacetale liegen ohne Verwendung von Reglern im Bereich von 50 000 bis 300 000 (GPC gegen Polystyrolstandard).

Zur Desaktivierung des Initiators in der Polymerschmelze werden basische Verbindungen, z.B. Salze wie Soda oder Dinatriumhydrogenphosphat sowie aliphatische oder aromatische primäre, sekundäre oder tertiäre Amine verwendet; bevorzugt werden leicht flüchtige tertiäre Amine, z.B. Triethylamin, eingesetzt.

Aus den genannten deutschen Anmeldungen P43 27 245.2 und P 44 23 617.4 ist bekannt, daß die als Desaktivatoren verwendeten basischen Salze oder Amine darüberhinaus in der Lage sind, instabile Kettenenden chemisch abzubauen. Von Vorteil ist dabei die Gegenwart von nicht umgesetzten Monomeren, die die Funktion eines Lösemittels und Transportvermittlers zur verbesserten Diffusion übernehmen.

Die Konzentrationen der alkalischen Agenzien bewegen sich bei 0,001 bis 3,0 Massenprozent, bezogen auf die Polymermenge, wobei der Bereich von 0,02 bis 2,0 Massenprozent und insbesondere von 0,05 bis 1,0 Massenprozent bevorzugt ist.

Die im zweiten Verfahrensschritt in der Desaktivierungszone, in der auch der Abbau der instabilen Kettenenden vorgenommen wird, anzuwendende Temperatur liegt bei 150°C bis 250°C, vorzugsweise 170°C bis 200°C. Es hat sich für die Abbaugeschwindigkeit als vorteilhaft erwiesen, 20 bis 30°C über der Polymerisationstemperatur zu bleiben. Der einzuhaltende Druckbereich reicht von 20 bis 200 bar, vorzugsweise von 20 bis 50 bar.

Im Temperaturbereich von 150 bis 175°C hat sich der Zusatz von Wasser oder primären Alkoholen mit bis zu drei Kohlenstaffatomen als vorteilhaft erwiesen, um den Abbau der instabilen Kettenenden zu beschleunigen.

Die einzustellende Verweilzeit in der Desaktivator- und Stabilisierungszone beträgt 0,2 bis 15 Minuten, vorzugsweise 1 bis 15 Minuten, insbesondere 2 bis 10 Minuten.

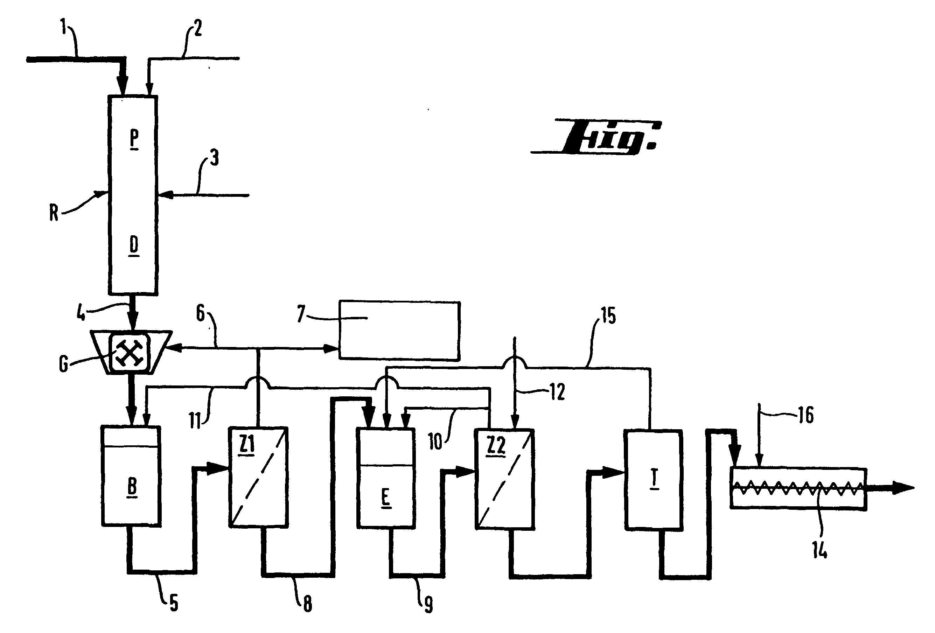

Eine zweckmäßige Ausführungsform des erfindungsgemäßen Verfahrens ist schematisch in der Figur gezeigt.

Im einzelnen ist dargestellt, daß in einem Polymerisationsreaktor R eine Polymerisationzone P und eine Desaktivierungszone D vorliegen. Der Polymrisationszone P ist die Monomerzufuhr 1 und die Initiatorzugabe 2 vorgeschaltet. Die Desaktivatorzudosierung 3 geschieht am Ende der Polymeristationszone P und vor der Desaktivierungszone D. Durch geeignete Reaktionsführung in der Polymerisationszone P und der Desaktivierungszone D erhält man am Reaktorausgang 4 einen Strom, bestehend aus einer Schmelze eines Polymeren mit einem Anteil an instabilen Kettenenden von 0,01 % bis 1%, vorzugsweise 0,02 % bis 0,5 %, insbesondere 0,05 % bis 0,3 % und Restmonomeren sowie Desaktivatoren und gegebenenfalls Lösemitteln. Bei der Entspannung erstarrt die Schmelze durch Verdampfung des Restmonomeren spontan. Dabei wird ein voluminöses, schaumiges Produkt mit geringer Schüttdichte (0,2 bis 0,3 g/cm³) erhalten. Zur Erzeugung eines kompakten Korns mit hoher Schüttdichte (0,4 bis 0,6 g/cm³) und der Rückgewinnung der Restmonomeren hat sich ein Heißabschlag mit einer Flüssigkeitsringgranuliervorrichtung G an dieser Stelle als vorteilhaft erwiesen.

Es sind an dieser Stelle aber auch andere Aggregate möglich, wie eine Vorrichtung zur Unterflüssigkeitsgranulierung oder zur Granulierung lediglich unter Verdampfungskühlung, die aber in der Figur nicht dargestellt sind.

Die aus der Flüssigkeitsringgranuliervorrichtung G erhaltene Suspension wird im Auffangbehälter B in Flüssigkeit und Feststoff getrennt. Im Bedarfsfalle kann das Produkt zuvor auch einer Naßmahlung unterzogen werden, um die Abtrennung der Restmonomeren zu fördern, was aber in der Figur nicht dargestellt ist. Über eine Leitung 5 gelangt das Verfahrensgut zur Trennvorrichtung Z1. Zur Trennung sind prinzipiell alle dafür üblichen Apparate und Maschinen wie Siebe, Filter, Hydrozyklone einsetzbar, als besonders geeignet haben sich Zentrifugen gezeigt. Die Flüssigkeit wird zum Teil als Kühlflüssigkeit 6 zur Flüssigkeitsringgranulierung G zurückgeführt und zum Teil zur Rückgewinnung der Restmonomeren und der Lösemittel in bekannter Weise einer Aufarbeitung 7 zugeführt.

Über eine Leitung 8 wird Feststoff mit anhaftender Flüssigkeit einer Extraktion E zugeführt. Als Extraktionsmittel sind Wasser und Alkohole mit bis zu drei Kohlenstoffatomen, bevorzugt Methanol, sowie Gemische daraus geeignet. Die nach obigem Polymerisationsverfahren hergestellten Produkte enthalten einen Anteil an Formaldehydoligomeren, die sich durch Entgasung nicht aus dem Polymer entfernen lassen. Es hat sich gezeigt, daß sich diese Formaldehydoligomeren unter milden Bedingungen aus dem Polymeren extrahieren lassen. Zur Beschleunigung des Vorganges ist es möglich, das Produkt vor der Extraktion oder auch direkt nach der Flüssigkeitsringgranulierung G weiter zu mahlen. Um eine schnelle Extraktion zu gewährleisten, ist es wünschenswert, die Teilchengröße im Bereich von 50 bis 2000 µm, vorzugsweise 100 bis 1500 µm, insbesondere 200 bis 1000 µm zu halten.

Geeignete Extraktionsmittel sind Wasser, Alkohole mit bis zu drei Kohlenstoffatomen, vorzugsweise Methanol, oder Gemische daraus. Das Extraktionsmittel ist ebenfalls geeignet, um als Kühlflüssigkeit nach der Flüssigkeitsringgranulierung G in dem Auffangbehälter B eingesetzt zu werden und kann daher zum Teil, nachdem es über eine Leitung 9 in die Trennvorrichtung Z2 gelangt ist, aus dieser über eine Leitung 11 in den Auffangbehälter B oder über eine Leitung 10 in die Extraktion E zurückgeführt werden.

Als Apparate für die Extraktion E sind prinzipiell alle dafür üblichen Anordnungen wie kontinuierlich und diskontinuierlich betriebene Rührkessel, Rührkesselkaskaden oder Strömungsrohre geeignet. Der Einsatz von Extraktoren ist ebenso möglich.

Über den Weg der am Feststoff anhaftenden Flüssigkeit stellt sich in der Extraktion E ein Pegel an basischen Substanzen ein, die zur Desaktivierung der aktiven Polymerketten und zum Abbau der instabilen Kettenenden der Desaktivatorzudosierung 3 zugesetzt werden. Es ist sicherzustellen, daß die Extraktion im basischen Bereich verläuft, d.h. im Bedarfsfalle sind basische Verbindungen an dieser Stelle zuzusetzen.

Die zur Extraktion anzuwendende Temperatur liegt im Bereich von 30 bis 130°C, vorzugsweise von 35°C bis 100°C, insbesondere von 40 bis 70°C. Die für die Extraktion erforderlichen Zeiten liegen bei 1 bis 60, vorzugsweise 5 bis 45, insbesondere 10 bis 30 Minuten. Mit Hilfe der Extraktion lassen sich Feststoffgehalte bis zu 30 Massenprozent, bevorzugt bis zu 20 Massenprozent erreichen.

Nach der Extraktion E werden Feststoff und Flüssigkeit in der Trennvorrichtung Z2 getrennt. Auch hier sind zur Trennung prinzipiell alle dafür üblichen Apparate und Maschinen wie Siebe, Filter, Hydrozyklone einsetzbar, als geeignet haben sich hier Zentrifugen gezeigt. Als besonders effektiv hat sich erwiesen, auf der Zentrifuge unter Zugabe von Frischlösemittel 12 zu waschen.

Im Anschluß daran wird das Trenngut nach konventionellen Verfahren in einem Trockner T getrocknet und das Kondensat des Trockners T zur Extraktion E über Leitung 15 zurückgeführt. Das erhaltene Pulver wird in bekannter Weise unter Zusatz von Stabilisatoren 16 und ggf. weiteren Zuschlagstoffen in einem Extruder 14 granuliert. Dabei ist es von Vorteil, wenn das Polymerpulver eine hohe Schüttdichte aufweist, da dieses einen optimalen Betrieb des Extruders 14 gewährleistet.

### Beispiele

Das Verfahren gemäß der Erfindung wurde in einem Rohrreaktor vorgenommen. Die Reaktionsbedingungen dabei waren wie folgt:
Die kontinuierliche Copolymerisation mit einem Durchsatz von 3 kg/h an 97 Gewichtsteilen Trioxan und 3 Gewichtsteilen Dioxolan, dem 450 ppm Methylal zugesetzt worden waren, wurde mit 0,2 ppm Trifluormethansulfonsäure, gelöst in Diethylenglykoldimethylether, initiiert. Die Polymerisation bei 155°C wurde nach 1,8 min mit 0,3% Triethylamin und 4% Wasser abgebrochen und der Abbau der instabilen Kettenenden bei 155°C in 15 min vorgenommen. Dabei wurde ein Produkt mit einem Anteil an instabilen Kettenenden von 0,3% erhalten. Durch Heißabschlag am Reaktorausgang unter weitgehender Verdampfung der Restmonomere entstand ein poröses Granulat mit einer Schüttdichte von 0,27 g/cm³ (Vergleichsbeispiel 1). Durch Entspannung und Granulierung in einer Wasserringgranuliervorrichtung unter sonst gleichen Bedingungen wurde ein Polymerkorn von 0,55 g/cm³ erhalten (Beispiel 1).

Das Produkt aus Vergleichsbeispiel 1 wurde mit Methanol gewaschen, um die anhaftenden Restmonomeren zu entfernen. Anschließend wurde das Produkt bis zur Gewichtskonstanz bei 80°C im Trockenschrank bei vermindertem Druck getrocknet. Das so erhaltene Produkt wurde auf einen mittleren Korndurchmesser von 400 µm aufgemahlen und für die folgenden Extraktionsversuche herangezogen.

100 g Polymerpulver wurde mit 600 g Lösemittel (siehe Tabelle), dem 0,1 % Triethylamin zugesetzt worden waren, extrahiert. Anschließend wurde das Produkt bei 80°C bis zur Gewichtskonstanz getrocknet. Aus dem Produkt wurde, nach Zusatz von Stabilisatoren, bei 200°C eine zylindrische Preßplatte von 5 cm Durchmesser und 2 mm Stärke hergestellt. Diese wurde 30 Minuten lang bei 80°C mit demineralisiertem Wasser extrahiert. In dem Extrakt wurde der Formaldehydgehalt (FA) nach der Chromotropsäuremethode bestimmt. Chromotropsäure bildet in schwefelsaurer Lösung mit Formaldehyd und allen Verbindungen, die sich unter diesen Bedingungen zu Formaldehyd umsetzen, ein violett gefärbtes Reaktionsprodukt, dessen Extinktion bei 480 nm ein Maß für den Formaldehydgehalt ist. Die Extinktion wird über eine Kalibrierung in einen Formaldehydgehalt umgerechnet und auf die Oberfläche der Preßplatte bezogen.

In den folgenden Beispielen wurde das Lösemittel, die Extraktionstemperatur und die Extraktionsdauer variiert.

| Beispiel | Lösemittel | Zeit [min] | Temperatur [°C] | Extrahierb. FA [µg/cm²] |
|---|---|---|---|---|
| Vergleichsbeispiel 1 | ------ | ------ | ------- | 51 |
| 2 | Wasser | 60 | 80 | 3,3 |
| 3 | Wasser | 60 | 115 | 1,0 |
| 4 | Methanol | 15 | 50 | 5,1 |
| 5 | Methanol | 30 | 50 | 4,9 |
| 6 | Methanol | 15 | 65 | 4.2 |
| 7 | Methanol | 30 | 65 | 6,9 |
| 8 | 15% Wasser/85% Methanol | 15 | 65 | 3,6 |

Unter allen Extraktionsbedingungen wurde der extrahierbare Formaldehydgehalt drastisch gesenkt. Ein besonders gutes Ergebnis ergab Beispiel 3. In Beispiel 8 wurde unter besonders milden Bedingungen ebenfalls ein recht niedriger Gehalt an extrahierbarem Formaldehyd gefunden. Diese Extraktionsbedingungen wurden in fünf Ansätzen im Technikumskessel nachgestellt und entsprechend 25 kg Produkt hergestellt, stabilisiert und granuliert. Im Gegensatz zu einem nicht extrahierten Produkt, welches bei vermindertem Druck von 50 mbar auf einem Extruder entgast wurde und einen extrahierbaren Formaldehydgehalt von 39 µg/cm² aufwies (Vergleichsbeispiel 2), zeigte sich bei diesem Produkt beim Anfertigen von Spritzgußteilen nach 1200 Schuß bei Zylindertemperatur von 250°C und Formtemperatur von 80°C kein Formbelag (Beispiel 9).

## Patentansprüche

1. Verfahren zur Herstellung und Endgruppenstabilisierung von Polyacetalcopolymeren in homogener Phase sowie deren Aufarbeitung, bei dem in einem Polymerisationsreaktor cyclische Formaldehydoligomere mit cyclischen Acetalen in Gegenwart eines Initiators copolymerisiert werden und nach dem Polymerisationsschritt der Initiator durch Zusatz basischer Substanzen desaktiviert wird, wobei auch die instabilen Kettenenden in Anwesenheit von Restmonomeren bis auf 0,01 % bis 1% abgebaut werden, **dadurch gekennzeichnet, daß** das Produkt am Reaktorausgang durch Entspannung in einer Granuliervorrichtung einen Großteil der Restmonomeren verliert und die verbleibenden Restmonomeren sowie die im Produkt gelösten Verunreinigungen durch Extraktion mit einem Lösemittel bei einer Temperatur von 30°C bis 130°C entfernt werden und das Produkt nach Trocknung und Stabilisierung granuliert wird.

2. Verfahren nach Anspruch 1, **dadurch gekennzeichnet, daß** die Granuliervorrichtung ein Flüssigkeitsringgranulator oder ein Unterflüssigkeitsgranulator darstellt.

3. Verfahren nach Anspruch 1 oder 2, **dadurch gekennzeichnet, daß** die Polymerisation und der Abbau in einem Rohrreaktor durchgeführt wird.

4. Verfahren nach einem oder mehreren der Ansprüche 1 bis 3, **dadurch gekennzeichnet, daß** Trioxan als cyclisches Formaldehydoligomeres eingesetzt wird.

5. Verfahren nach einem oder mehreren der Ansprüche 1 bis 4, **dadurch gekennzeichnet, daß** die instabilen Kettenenden bis auf 0,02 % bis 0,5 %, insbesondere auf 0,05 % bis 0,3 % abgebaut werden.

6. Verfahren nach einem oder mehreren der Ansprüche 1 bis 5, **dadurch gekennzeichnet, daß** das Produkt am Reaktorausgang in eine Granuliervorrichtung, die mit Wasser, Alkoholen mit bis zu drei Kohlenstoffatomen, vorzugsweise Methanol, oder Gemischen daraus betrieben wird, entspannt wird.

7. Verfahren nach einem oder mehreren der Ansprüche 1 bis 6, **dadurch gekennzeichnet, daß** als Lösemittel bei der Extraktion Wasser, Alkohol mit bis zu drei Kohlenstoffatomen, vorzugsweise Methanol, oder Gemische daraus, eingesetzt werden.

8. Verfahren nach einem oder mehreren der Ansprüche 1 bis 7, **dadurch gekennzeichnet, daß** die Teilchengröße bei der Extraktion im Bereich von 50 bis 2000 µm, vorzugsweise 100 bis 1500 µm und insbesondere 200 bis 1000 µm liegt.

9. Verfahren nach einem oder mehreren der Ansprüche 1 bis 8, **dadurch gekennzeichnet, daß** die Verweilzeit der Reaktionsmischung im polymerisationsaktiven Zustand 0,1 bis 10 Minuten, insbesondere 0,5 bis 2 Minuten beträgt.

10. Verfahren nach einem oder mehreren der Ansprüche 1 bis 9, **dadurch gekennzeichnet, daß** die Stabilisierung mit basischen Verbindungen in Mengen von 0,001 bis 3,0 Massenprozent während einer Verweilzeit von 0,2 bis 15 Minuten vorgenommen wird.

11. Verfahren nach einem oder mehreren der Ansprüche 1 bis 10, **dadurch gekennzeichnet, daß** die Stabilisierung bei 150°C bis 250°C, vorzugsweise 170°C bis 200°C vorgenommen wird.

## Claims

1. A process for the preparation and end group stabilization of a polyacetal copolymer in a homogeneous phase and working up thereof, in which a cyclic formaldehyde oligomer is copolymerized with a cyclic acetal in the presence of an initiator in a polymerization reactor and after the polymerization step the initiator is deactivated by addition of a basic substance, the unstable chain ends also being degraded down to 0.01% to 1% in the presence of residual monomer, wherein the product loses the majority of the residual monomer at the reactor outlet by letting down into a pelletizing device and the residual monomer which remains and the impurities dissolved in the product are removed by extraction with a solvent at a temperature of 30°C to 130°C and the product is pelletized, after drying and stabilization.

2. The process as claimed in claim 1, wherein the pelletizing device is a liquid-cooled die face pelletizer or a submersed pelletizer.

3. The process as claimed in claim 1 or 2, wherein the polymerization and the degradation are carried out in a tube reactor.

4. The process as claimed in one or more of claims 1 to 3, wherein trioxane is employed as the cyclic formaldehyde oligomer.

5. The process as claimed in one or more of claims 1 to 4, wherein the unstable chain ends are degraded down to 0.02% to 0.5%, in particular to 0.05% to 0.3%.

6. The process as claimed in one or more of claims 1 to 5, wherein the product is let down at the reactor outlet into a pelletizing device which is operated with water, an alcohol having up to three carbon atoms, preferably methanol, or a mixture thereof.

7. The process as claimed in one or more of claims 1 to 6, wherein water, an alcohol having up to three carbon atoms, preferably methanol, or a mixture thereof is employed as the solvent in the extraction.

8. The process as claimed in one or more of claims 1 to 7, wherein the particle size during the extraction is in the range from 50 to 2000 µm, preferably 100 to 1500 µm and in particular 200 to 1000 µm.

9. The process as claimed in one or more of claims 1 to 8, wherein the residence time of the reaction mixture in the polymerization-active state is 0.1 to 10 minutes, in particular 0.5 to 2 minutes.

10. The process as claimed in one or more of claims 1 to 9, wherein the stabilization is carried out with a basic compound in an amount of 0.001 to 3.0 percent by weight during a residence time of 0.2 to 15 minutes.

11. The process as claimed in one or more of claims 1 to 10, wherein the stabilization is carried out at 150°C to 250°C, preferably 170°C to 200°C.

## Revendications

1. Procédé de préparation et de stabilisation des groupes terminaux de copolymères de polyacétals en phase homogène ainsi que leur traitement, dans lequel des oligomères de formaldéhyde cycliques sont copolymérisés avec des acétals cycliques en présence d'un amorceur dans un réacteur de polymérisation et l'amorceur est désactivé après l'étape de polymérisation en ajoutant des substances basiques, où les extrémités de chaînes instables sont également dégradées jusqu'à 0,01 % à 1 % en présence de monomères résiduels, **caractérisé en ce que** le produit perd une grande partie des monomères résiduels à la sortie du réacteur par détente dans un dispositif de granulation, et les monomères résiduels restants ainsi que les impuretés dissoutes dans le produit sont éliminés par extraction avec un solvant à une température de 30°C à 130°C et le produit est granulé après séchage et stabilisation.

2. Procédé selon la revendication 1, **caractérisé en ce que** le dispositif de granulation est un granulateur à anneau liquide ou un granulateur immergé.

3. Procédé selon la revendication 1 ou 2, **caractérisé en ce que** la polymérisation et la dégradation sont réalisées dans un réacteur tubulaire.

4. Procédé selon l'une ou plusieurs des revendications 1 à 3, **caractérisé en ce que** le trioxane est utilisé en tant qu'oligomère de formaldéhyde cyclique.

5. Procédé selon l'une ou plusieurs des revendications 1 à 4, **caractérisé en ce que** les extrémités de chaînes instables sont dégradées jusqu'à 0,02 % à 0,5 %, en particulier jusqu'à 0,05 % à 0,3 %.

6. Procédé selon l'une ou plusieurs des revendications 1 à 5, **caractérisé en ce que** le produit est détendu à la sortie du réacteur dans un dispositif de granulation qui fonctionne avec de l'eau, des alcools ayant jusqu'à trois atomes de carbone, de préférence le méthanol, ou leurs mélanges.

7. Procédé selon l'une ou plusieurs des revendications 1 à 6, **caractérisé en ce que** l'on utilise en tant que solvant, lors de l'extraction, de l'eau, un alcool ayant jusqu'à trois atomes de carbone, de préférence le méthanol, ou leurs mélanges.

8. Procédé selon l'une ou plusieurs des revendications 1 à 7, **caractérisé en ce que** la taille de particules lors de l'extraction est dans la plage de 50 à 2 000 µm, de préférence de 100 à 1 500 µm et en particulier de 200 à 1 000 µm.

9. Procédé selon l'une ou plusieurs des revendications 1 à 8, **caractérisé en ce que** le temps de séjour du mélange réactionnel à l'état actif de polymérisation est de 0,1 à 10 minutes, en particulier de 0,5 à 2 minutes.

10. Procédé selon l'une ou plusieurs des revendications 1 à 9, **caractérisé en ce que** la stabilisation est réalisée avec des composés basiques en quantités de 0,001 à 3,0 pour cent en masse pendant un temps de séjour de 0,2 à 15 minutes.

11. Procédé selon l'une ou plusieurs des revendications 1 à 10, **caractérisé en ce que** la stabilisation est réalisée entre 150°C et 250°C, de préférence entre 170°C et 200°C.
